# FASCICULE DE BREVET EUROPEEN

(11) **EP 0 547 953 B1**
(45) Date de publication et mention de la délivrance du brevet: **20.09.1995**
(21) Numéro de dépôt: 92403382.2
(22) Date de dépôt: 11.12.1992
(51) Int. Cl.: B60K 1/04

(54) **Véhicule électrique perfectionné**
Elektrofahrzeug
Electric vehicle

(30) Priorité: 17.12.1991 FR 9115652
(43) Date de publication de la demande: 23.06.1993
(73) Titulaire: AUTOMOBILES PEUGEOT, 75116 Paris (FR); AUTOMOBILES CITROEN, 92200 Neuilly-sur-Seine (FR)
(72) Inventeur: Petiot, Jean Paul, F-91460 Marcoussis (FR)
(74) Mandataire: Durand, Yves Armand Louis

(56) Documents cités:
- FR-A- 2 311 673
- FR-A- 2 387 814
- US-A- 1 875 627
- US-A- 3 477 538
- US-A- 3 983 952
- US-A- 4 365 681

## Description

La présente invention a essentiellement pour objet un véhicule électrique perfectionné à trois places.

On a déjà proposé des véhicules électriques comprenant, d'une manière générale, un ensemble de batteries qui alimentent un moteur électrique relié aux roues arrière du véhicule par une transmission et qui présentent une configuration en T comme décrit dans le préambule de la revendication 1 (voir document US-A-3983952).

Cependant, jusqu'à présent, les éléments mécaniques et les batteries du véhicule ne constituaient pas un ensemble harmonieux et tenant compte notamment du confort des passagers, des problèmes en cas de choc frontal et du centre de gravité qui doit être le plus bas possible.

Tous ces problèmes tiennent notamment aux difficultés d'implantation des batteries qui possèdent une masse et un volume importants et dont le positionnement dans le véhicule est délicat.

Aussi, la présente invention a pour but de résoudre ces problèmes en proposant un petit véhicule électrique très confortable pour les passagers et possédant pratiquement toutes les qualités que l'on trouve sur les véhicules modernes actuels et à savoir : confort des passagers, volume du coffre-arrière préservé, centre de gravité bas, inertie en lacet petite, et excellent comportement du véhicule en cas de choc frontal.

A cet effet, l'invention a pour objet un véhicule électrique perfectionné comprenant un ensemble de batteries qui alimente un moteur électrique relié par une transmission aux roues arrière du véhicule, et qui présente une configuration en T dont la branche centrale est située dans l'axe longitudinal médian du véhicule et dont la branche transversale est transversale audit axe, caractérisé en ce qu'il comporte trois sièges à assises disposées au-dessus de l'ensemble de batteries, et à savoir : un siège conducteur dont l'assise est située au-dessus de la branche centrale du T ; et deux sièges individuels passagers derrière le siège conducteur de chaque côté de celui-ci et de part et d'autre de la branche centrale du T, les assises de ces deux sièges étant situées au-dessus de la branche transversale du T, l'ensemble des batteries étant situé au niveau de la garde au sol, et le plancher sur lequel reposent les pieds du conducteur et des passagers étant également situé au niveau de ladite garde au sol.

Suivant une autre caractéristique du véhicule de l'invention, l'ensemble de batteries est ceinturé par une structure tubulaire constituant le châssis du véhicule.

On précisera encore ici que la structure tubulaire précitée comprend essentiellement deux longerons parallèles situés au droit des côtés du véhicule, deux autres longerons parallèles situés de chaque côté de la branche centrale du T, deux traverses en avant de la branche transversale du T, et une autre traverse en avant de la branche centrale du T.

Suivant une autre caractéristique de cette invention, le châssis comporte une partie se prolongeant vers l'avant du véhicule et faisant office d'absorbeur de chocs.

Les batteries sont contenues dans un boîtier vissé sur le dessous du châssis et sont recouvertes par le plancher du véhicule.

Le moteur électrique alimenté par les batteries est vissé sous le plancher du véhicule et situé environ dans l'axe des roues arrière.

Mais d'autres caractéristiques et avantages de l'invention apparaîtront mieux dans la descriptioon détaillée qui suit et se réfère aux dessins annexés, donnés uniquement à titre d'exemple, et dans lesquels :
La figure 1 est une vue schématique de côté et en élévation d'un véhicule conforme aux principes de l'invention.
La figure 2 est une vue de dessus de ce véhicule.
La figure 3 est une vue côté avant du véhicule.
La figure 4 est une vue schématique et en coupe suivant la ligne IV-IV de la figure 2.

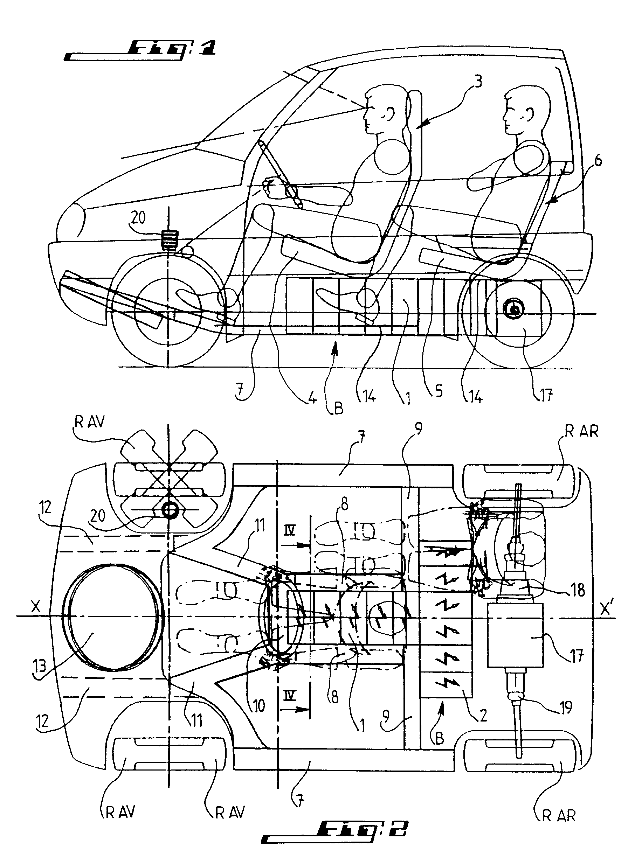

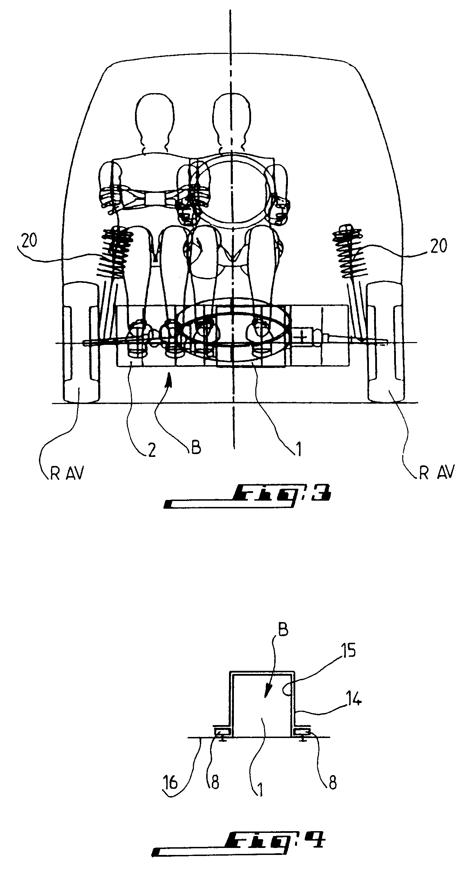

En se reportant aux figures, on voit qu'un véhicule électrique selon cette invention comprend un ensemble de batteries B situé au niveau de la garde au sol du véhicule (voir figures 1 et 3), et présentant une configuration en T.

La branche verticale (centrale) 1 du T est située dans l'axe longitudinal médian X-X' du véhicule, tandis que la branche horizontale (transversale) 2 du T est transversale audit axe.

On a montré en 3 un siège conducteur dont l'assise 4 est située au-dessus de la branche verticale 1 du T, c'est-a-dire dans l'axe longitudinal médian X-X' du véhicule. Dès lors, le conducteur, qui se trouve au centre du véhicule est placé entre les deux passages de roue avant RAV, ce qui permet de réaliser un véhicule court, sans empêcher les grands angles de braquage. De plus, le confort et la visibilité du conducteur sont parfaits, en raison de sa situation centrale dans le véhicule.

A l'arrière, le véhicule peut loger deux passagers d'un côté et de l'autre du siège avant 3, comme on peut le comprendre en se reportant à la figure 2 où un seul passager arrière a été représenté.

L'assise 5 des deux sièges arrière 6 est située au-dessus de la branche horizontale 2 du T constituant l'ensemble de batteries B.

Cet ensemble de batteries situé au niveau de la garde au sol et conférant par conséquent au véhicule un centre de gravité très bas, est imbriqué dans une structure tubulaire constituant le châssis du véhicule et ceinturant ledit ensemble.

Cette structure tubulaire est réalisée à partir de tubes à section rectangulaire et, comme on le voit sur la figure 2, comprend les éléments suivants :
- deux longerons parallèles 7 situés au droit des côtés du véhicule;
- deux autres longerons parallèles 8 adjacents à ou situés de chaque côté de la branche verticale 1 du T constituant l'ensemble de batteries B;
- deux traverses 9 en avant de et parallèles à la branche horizontale 2 du T; et
- une autre traverse 10 en avant de la branche verticale 1 du T et reliant les deux longerons 8.

Les longerons 7 et 8 se prolongent vers l'avant du véhicule comme montré en 11 et 12 sur la figure 2 pour réaliser ainsi une structure avant susceptible d'absorber les chocs les pieds du conducteur et la roue de secours 13 étant en quelque sorte situés entre ces parties 11 et 12.

On a montré en 14 sur la figure 1 le plancher du véhicule qui, comme on le voit sur la figure 4 recouvre l'ensemble de batteries B. Plus précisément, cet ensemble est contenu dans un boîtier 15 dont le fond 16 est fixé, par exemple vissé sur le dessous de la structure tubulaire formant châssis du véhicule. On voit clairement sur la figure 4 que le boîtier 15 est, au niveau de la branche verticale 1 du T, vissé sur les longerons 8.

On a montré en 17 sur la figure 2 un moteur électrique alimenté par l'ensemble de batteries B et se trouvant à l'arrière du véhicule, ce qui permet de charger l'essieu arrière et donc de bien exploiter le freinage électrique permis par le moteur.

Ce moteur 17 est, comme on peut le voir sur la figure 1, fixé, par exemple vissé sous le plancher 14 du véhicule et il est situé environ dans l'axe des roues arrière RAR.

Le moteur électrique 2 n'est pas situé dans l'axe longitudinal médian X-X' du véhicule pour laisser la place à un réducteur et un différentiel 18 qui, suivant l'exemple représenté, sont du côté de la roue arrière droite. La transmission vers la roue arrière gauche passe axialement par l'arbre du moteur 2 qui est creux. Autrement dit, l'arbre de transmission du côté de la roue arrière gauche est relié au différentiel 18 en passant à travers l'arbre creux du moteur. On voit en 19 les tripodes qui assurent la transmission tout en permettant le débattement des roues arrière et qui sont symétriques par rapport à l'axe X-X' du véhicule.

On a montré en 20 sur les figures 1 à 3 la suspension avant du véhicule qui est du type Mac Pherson à ressort et permet un pivotement des roues de l'ordre de 45° de chaque côté.

On a donc réalisé suivant l'invention un véhicule électrique à trois places qui est court et ne procure aucune gêne pour les genoux du conducteur, de même que les passagers arrière peuvent descendre et monter sans gêner le conducteur et inversement si le véhicule comporte trois portes. En outre, la longueur disponible devant les pieds du conducteur peut être consacrée à la réalisation d'une structure performante en cas de choc frontal, le conducteur, du fait de sa situation centrale dans le véhicule, étant par ailleurs bien protégé des chocs latéraux grâce à l'agencement décrit ci-dessus des longerons constituant le châssis. Il faut encore ajouter que les batteries étant agencées suivant l'axe du véhicule, l'inertie en lacet sera petite.

Bien entendu, l'invention n'est nullement limitée au mode de réalisation décrit et illustré qui n'a été donné qu'à titre d'exemple.

## Revendications

1. Véhicule électrique comprenant un ensemble de batteries (B)qui alimente un moteur électrique (17) relié par une transmission aux roues arrière (RAR) du véhicule, et qui présente une configuration en T dont la branche centrale (1) est située dans l'axe longitudinal médian (X-X') du véhicule et dont la branche transversale (2) est transversale audit axe, caractérisé en ce qu'il comporte trois sièges à assises disposées au-dessus de l'ensemble de batteries (B), et à savoir : un siège conducteur (3) dont l'assise (4) est située au-dessus de la branche centrale (1) du T ; et deux sièges individuels passagers (6) derrière le siège conducteur (3) de chaque côté de celui-ci et de part et d'autre de la branche centrale (1) du T, les assises (5) de ces deux sièges étant situées au-dessus de la branche transversale (2) du T, l'ensemble des batteries (B) étant situé au niveau de la garde au sol, et le plancher (14) sur lequel reposent les pieds du conducteur et des passagers étant également situé au niveau de ladite garde au sol.

2. Véhicule selon la revendication 1, caractérisé en ce que l'ensemble de batteries (a) est ceinturé par une structure tubulaire constituant le châssis du véhicule.

3. Véhicule selon la revendication 1 ou 2, caractérisé en ce que la structure tubulaire précitée comprend essentiellement deux longerons parallèles (7) situés au droit des côtés du véhicule, deux autres longerons parallèles (8) situés de chaque côté de la branche centrale (1) du T, deux traverses (9) en avant de la branche transversale (2) du T, et une autre traverse (10) en avant de la branche centrale (1) du T.

4. Véhicule selon l'une des revendications précédentes, caractérisé en ce que le châssis comporte une partie (11, 12) se prolongeant vers l'avant du véhicule et faisant office d'absorbeur de chocs.

5. Véhicule selon l'une des revendications précédentes, caractérisé en ce que les batteries (B) sont contenues dans un boîtier (15) vissé sur le dessous du châssis et sont recouvertes par le plancher (14) du véhicule.

6. Véhicule selon l'une des revendications précédentes, caractérisé en ce qu'il comprend un moteur électrique (17) vissé sous le plancher (14) du véhicule et situé environ dans l'axe des roues arrière.

## Claims

1. Electric vehicle comprising a system of storage batteries (B) which feeds an electric motor (17) connected by a transmission to the rear wheels (RAR) of the vehicle and which exhibits a T-shaped configuration the central leg (1) of which is located on the longitudinal middle axis (X-X') of the vehicle and the transverse leg (2) of which is transverse to the said axis, characterized in that it comprises three seats with seating parts disposed above the system of storage batteries (B), namely : a driver's seat (3) the seating part (4) of which is located above the central leg (1) of the T ; and two individual passenger seats (6) behind the driver's seat (3) on either side thereof and on either side of the central leg (1) of the T, the seating parts (5) of these two seats being located above the transverse leg (2) of the T, the system of storage batteries (B) being located at the level of the ground clearance and the floor (14) upon which are resting the feet of the driver and of the passengers being also located at the level of the said ground clearance.

2. Vehicle according to claim 1, characterized in that the system of storage batteries (B) is surrounded by a tubular structure constituting the chassis of the vehicle.

3. Vehicle according to claim 1 or 2, characterized in that the aforesaid tubular structure essentially comprises two parallel longitudinal members (7) located on the sides of the vehicle, two other parallel longitudinal members (8) located on either side of the central leg (1) of the T, two cross-members (9) forward of the transverse leg (2) of the T and another cross-member (10) forward of the central leg (1) of the T.

4. Vehicle according to one of the foregoing claims, characterized in that the chassis comprises a part (11, 12) extending towards the front portion of the vehicle and performing the function of a shock absorber.

5. Vehicle according to one of the foregoing claims, characterized in that the storage batteries (B) are contained in a casing (15) fastened by screws to the underside of the chassis and are covered by the floor (14) of the vehicle.

6. Vehicle according to one of the foregoing claims, characterized in that it comprises an electric motor (17) fastened by screws underneath the floor (14) of the vehicle and located approximately on the axis of the rear wheels.

## Patentansprüche

1. Elektrisches Fahrzeug mit einer Gruppe von Stromsammlern (B), die einen über eine Übertragung mit den Hinterrädern (RAR) des Fahrzeuges verbundenen elektrischen Motor (17) speist und die eine T-förmige Gestalt aufweist, deren Mittelschenkel (1) auf der Längsmittelachse (X-X') des Fahrzeuges gelegen ist und deren Querschenkel (2) quer zu der besagten Achse verläuft, dadurch gekennzeichnet, dass es drei Sitze mit oberhalb der Gruppe von Stromsammlern (B) angeordneten Sitzgliedern aufweist und zwar: einen Fahrersitz (3), dessen Sitzglied (4) oberhalb des mittleren Schenkels (1) des T's gelegen ist und zwei einzelnen Fahrgastsitzen (6) hinter dem Fahrersitz (3) beiderseits desselben und beiderseits des mittleren Schenkels (1) des T's wobei die Sitzglieder (5) dieser beiden Sitze oberhalb des Querschenkels (2) des T's gelegen sind, wobei die Gruppe von Stromsammlern (B) in der Höhe der Bodenfreiheit gelegen ist und der Fußboden (14) auf welchem die Füsse des Fahrers und der Fahrgäste ruhen, ebenfalls in Höhe der besagten Bodenfreiheit gelegen ist.

2. Fahrzeug nach Anspruch 1, dadurch gekennzeichnet, dass die Gruppe von Stromsammlern (B) von einem das Untergestell des Fahrzeuges bildenden rohrförmigen Aufbau umfasst ist.

3. Fahrzeug nach Anspruch 1 oder 2, dadurch gekennzeichnet, dass der vorgenannte rohrförmige Aufbau im wesentlichen zwei an den Seiten des Fahrzeuges gelegene parallele Längsholme (7), zwei andere auf jeder Seite des mittleren Schenkels (1) des T's gelegene Längsträger, zwei Querstreben (9) vor dem Querschenkel (2) des T's und eine andere Querstrebe (10) vor dem mittleren Schenkel (1) des T's umfasst.

4. Fahrzeug nach einem der vorangehenden Ansprüche, dadurch gekennzeichnet, dass das Untergestell einen sich nach vorne des Fahrzeuges fortsetzenden und die Funktion eines Stoßdämpfers erfüllenden Teil (11, 12) aufweist.

5. Fahrzeug nach einem der vorangehenden Ansprüche, dadurch gekennzeichnet, dass die Stromsammler (B) in einem an die Unterseite des Untergestells angeschraubten Kasten (15) enthalten sind und durch den Fussboden (14) des Fahrzeuges überdeckt sind.

6. Fahrzeug nach einem der vorangehenden Ansprüche, dadurch gekennzeichnet, dass es einen unter dem Fussboden (14) des Fahrzeuges angeschraubten und ungefähr entlang der Achse der Hinterräder liegenden elektrischen Motor (17) umfasst.
